# EUROPEAN PATENT APPLICATION

(11) **EP 4 852 412 A1**
(43) Date of publication of application: **09.12.2026**
(21) Application number: 24923380.0
(22) Date of filing: 15.10.2024
(51) Int. Cl.: H04L 67/56

(54) **PRECODING MATRIX INFORMATION TRANSMISSION AND RECEPTION METHODS, APPARATUS, AND STORAGE MEDIUM**

(30) Priority: 06.02.2024 CN 202410171499
(71) Applicant: ZTE Corporation, Shenzhen, Guangdong 518057 (CN)
(72) Inventor: LI, Yong, Shenzhen, Guangdong 518057 (CN); WEI, Xingguang, Shenzhen, Guangdong 518057 (CN); LU, Zhaohua, Shenzhen, Guangdong 518057 (CN); LI, Lun, Shenzhen, Guangdong 518057 (CN); XIAO, Huahua, Shenzhen, Guangdong 518057 (CN); LIU, Wenfeng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/125042
(87) International publication number: WO 2025/167176

(57) **Abstract**

Embodiments of the present disclosure provide precoding matrix information transmission and reception methods, an apparatus, and a storage medium. The method comprises: a first node receiving first configuration information, wherein the first configuration information is used for indicating K time points, and K is a positive integer greater than 1; selecting M time points from the K time points, and transmitting channel state information on the basis of the M time points, wherein the channel state information comprises precoding matrix information of the M time points, and M is a positive integer less than K.

## Description

The present disclosure claims priority to the Chinese Patent Application No. 202410171499.6 filed on February 6, 2024, the entire content of which is incorporated herein by reference.

### TECHNICAL FIELD

The present disclosure relates to the technical field of communications, and in particular, to a method for sending precoding matrix information and a method for receiving precoding matrix information, an apparatus, and a storage medium.

### BACKGROUND

A multiple-antenna system is an important technology in the field of communications, and a core of the multiple-antenna system is a multiple-antenna technology. The multiple-antenna technology is implemented by applying a precoding matrix matching a channel state on multiple antennas, so as to improve performance of transmitted data. The multiple-antenna technology is one of core technologies of the physical layer of the 4th generation mobile communication technology (4G) and 5th generation mobile communication technology (5G), and it significantly improves frequency spectrum efficiency of the system and improves the experience of edge users by means of space division multiplexing, beamforming, multiuser multiple-input multiple-output technology (MU-MIMO), and the like. The multiple-antenna technology will also be one of core technologies of the physical layer of the future 6th generation mobile communication technology (6G). In the multiple-antenna system, the precoding matrix is an important concept. The precoding matrix is a mode for preprocessing a transmitted signal at a transmitting end, by optimizing power, rate, and even a transmission direction loaded on each data stream, to obtain better performance.

### SUMMARY

The present disclosure provides a method for sending precoding matrix information and a method for receiving precoding matrix information, an apparatus, and a storage medium.

In a first aspect, the present disclosure provides a method for sending precoding matrix information, where the method is applied to a first node, and the method includes:
receiving first configuration information, where the first configuration information is used to indicate K time points, and K is a positive integer greater than 1;
selecting M time points from the K time points; and
sending channel state information based on the M time points; where the channel state information includes precoding matrix information of the M time points, and M is a positive integer less than K.

In a second aspect, the present disclosure provides a method for receiving precoding matrix information, where the method is applied to a second node, and the method includes:
sending first configuration information, where the first configuration information is used to indicate K time points, and K is a positive integer greater than 1;
receiving channel state information; where the channel state information includes precoding matrix information of M time points selected from the K time points by a first node, and M is a positive integer less than K.

In a third aspect, the present disclosure provides a communication apparatus, where the communication apparatus includes:
a receiving module, configured to receive first configuration information, where the first configuration information is used to indicate K time points, and K is a positive integer greater than 1;
a processing module, configured to select M time points from the K time points;
a sending module, configured to send channel state information based on the M time points; where the channel state information includes precoding matrix information of the M time points, and M is a positive integer less than K.

In a fourth aspect, the present disclosure provides another communication apparatus, where the communication apparatus includes:
a sending module, configured to send first configuration information, where the first configuration information is used to indicate K time points, and K is a positive integer greater than 1;
a receiving module, configured to receive channel state information; where the channel state information includes precoding matrix information of M time points selected from the K time points by a first node, and M is a positive integer less than K.

In a fifth aspect, the present disclosure further provides a communication apparatus, including: a memory and a processor; the memory and the processor are coupled; the memory is configured to store instructions executable by the processor; the processor, upon executing the instructions, performs any method provided in the first aspect or the second aspect.

In a sixth aspect, the present disclosure provides a computer program product including computer instructions, where when the computer instructions are run on a computer, the computer performs any method provided in the above first aspect or second aspect.

### BRIEF DESCRIPTION OF THE DRAWINGS

The drawings are used to provide a further understanding of the technical solutions of the present disclosure and constitute a part of the specification, and together with the embodiments of the present disclosure, are used to explain the technical solutions of the present disclosure, but do not constitute a limitation on the technical solutions of the present disclosure.
FIG. 1 is a schematic architecture diagram of a communication system provided in the embodiments of the present disclosure.
FIG. 2 is a schematic flowchart of a method for sending precoding matrix information provided in the embodiments of the present disclosure.
FIG. 3 is a schematic flowchart of a method for receiving precoding matrix information provided in the embodiments of the present disclosure.
FIG. 4 is a schematic composition diagram of a communication apparatus provided in the embodiments of the present disclosure.
FIG. 5 is a schematic composition diagram of another communication apparatus provided in the embodiments of the present disclosure.
FIG. 6 is a schematic structural diagram of a communication apparatus provided in the embodiments of the present disclosure.

### DETAILED DESCRIPTION

The technical solutions in the embodiments of the present disclosure will be clearly and completely described below with reference to the drawings in the embodiments of the present disclosure, and obviously, the described embodiments are only a part of the embodiments of the present disclosure, rather than all of the embodiments. Based on the embodiments in the present disclosure, all other embodiments obtained by those ordinary skilled in the art without creative efforts shall fall within the protection scope of the present disclosure.

In the description of the present disclosure, unless otherwise specified, "/" means "or", for example, A/B may represent A or B. Herein, "and/or" is only an association relationship describing associated objects, indicating that three relationships may exist, for example, A and/or B may represent: only A, only B, and both A and B. Further, "at least one" refers to one or more, and "a plurality of/multiple" refers to two or more. The words "first", "second", and the like do not limit the number and execution order, and the words "first", "second", and the like do not necessarily limit that they are different.

It needs to be noted that in the present disclosure, words such as "exemplarily" or "for example/such as/e.g." are used to represent an example, an illustration, or a description. Any embodiment or design solution described with "exemplarily" or "for example/such as/e.g." in the present disclosure should not be interpreted as being more preferred or more advantageous than other embodiments or design solutions. To be precise, using words such as "exemplarily" or "for example/such as/e.g." is intended to present related concepts in an example manner.

The multiple-antenna technology is implemented by applying a precoding matrix matching a channel state on multiple antennas, so as to improve performance of transmitted data. The multiple-antenna technology is one of core technologies of the physical layer of the 4G and 5G, and it significantly improves frequency spectrum efficiency of the system and improves the experience of edge users by means of space division multiplexing, beamforming, MU-MIMO, and the like. The multiple-antenna technology will also be one of core technologies of the physical layer of the future 6G.

In some embodiments, a base station sends a reference signal, and correspondingly, a terminal measures the reference signal, to determine precoding matrix information from the base station to the terminal, and reports the precoding matrix information to the base station, so that the base station receives the precoding matrix information reported by the terminal. Further, the base station may determine a data transmission strategy according to a precoding matrix represented by the received precoding matrix information, and transmit data, thereby improving efficiency of data transmission. Therefore, it can be seen that an accuracy degree of the precoding matrix represented by the precoding matrix information will affect the transmission strategy of the base station, and further affect the efficiency and a success rate of data transmission.

In addition, the time when the base station transmits data lags behind a transmission time of the reference signal, and due to time variability of a channel state, the channel state when data is transmitted has changed relative to the channel state at the transmission time of the reference signal, that is, the channel state when data is transmitted is already different from the channel state at the transmission time of the reference signal, thereby causing that the transmission strategy specified by the base station based on the precoding matrix information corresponding to the channel state at the transmission time of the reference signal no longer matches the channel state when data is transmitted, which may result in a decrease in the efficiency and the success rate of data transmission. Predicting precoding matrix information at a future time instant based on a reference signal received at a historical time instant or a current time instant, may reduce a time delay between data transmission by the base station and the used precoding matrix information. Moreover, since data needs to be transmitted in a future period of time, or data may need to be transmitted in a future period of time, it is necessary for the terminal to predict a precoding matrix in a future period of time, and report the precoding matrix information in this period of time to the base station, to reduce the time delay between data transmission by the base station and the used precoding matrix information, thereby improving performance of data transmission by the base station in the future period of time.

However, currently, resource overhead for reporting predicted precoding matrix information in a future period of time is very large, which occupies resources for the terminal to transmit data, other signals, or signaling to the base station, thereby reducing performance of the terminal to transmit data, other signals, or signaling to the base station. In addition, since the resource overhead for reporting the predicted precoding matrix information in the future period of time is large, it also leads to an increase in energy consumption of the terminal.

Therefore, how to design a mechanism for transmitting predicted precoding matrix information in a time period range, to reduce resource overhead for transmitting the predicted precoding matrix information and improve accuracy of the precoding matrix information, is a problem urgently to be solved in current wireless communication technologies, including future 6G wireless communication technologies.

In view of this, the present disclosure provides a method for sending precoding matrix information, and the method includes: a first node receiving first configuration information, where the first configuration information is used to indicate K time points, and K is a positive integer greater than 1. The first node selects M time points from the K time points, and sends channel state information based on the M time points. The channel state information includes precoding matrix information of the M time points, and M is a positive integer less than K. In this way, by feeding back the precoding matrix information at the M time points which is smaller than K, resource overhead for feedback may be reduced. In addition, by selecting appropriate M time points for feedback, accuracy of the fed-back precoding matrices at the K time points may also be improved.

Correspondingly, the present disclosure provides a method for receiving precoding matrix information, and the method includes: a second node sending first configuration information, where the first configuration information is used to indicate K time points, and K is a positive integer greater than 1. The second node receives channel state information; where the channel state information includes precoding matrix information of M time points selected from the K time points by a first node, and M is a positive integer less than K.

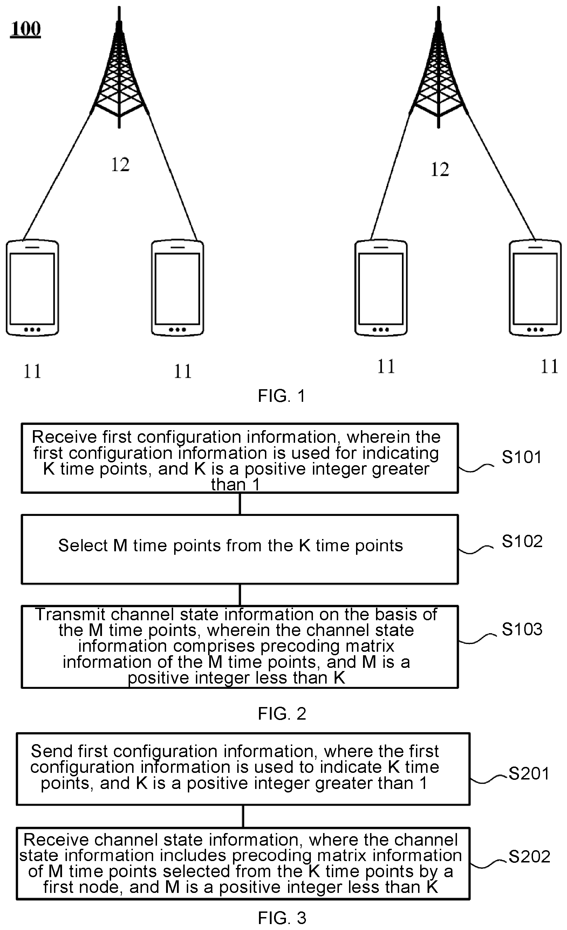

Methods provided in the embodiments of the present disclosure may be applied to various communication systems. For example, the communication system may be a long term evolution system, a 5G communication system, a Wi-Fi system, a communication system related to a 3rd generation partnership project (3GPP), a future evolved communication system (such as a sixth generation (6G) communication system, etc.), or a system integrating multiple systems, etc., which are not limited. The method provided in the embodiments of the present disclosure is described below by taking a communication system 100 shown in FIG. 1 as an example. FIG. 1 is only a schematic diagram and does not constitute a limitation on application scenarios of the technical solutions provided in the present disclosure.

FIG. 1 is a schematic architecture diagram of a communication system provided in the embodiments of the present disclosure. As shown in FIG. 1, the communication system 100 may include one or more first nodes 11 and one or more second nodes 12. The second node 12 may be communicatively connected with one or more first nodes 11.

In some embodiments, in the communication system 100, the first node 11 and the second node 12 communicate via a wireless channel. For example, the first node 11 is a terminal device, and the second node 12 is a network device, and the network device and the terminal device communicate via a wireless channel. For another example, the first node 11 is a terminal device, and the second node 12 is a wireless router, and the wireless router and the terminal device communicate via a wireless channel.

The network device may be configured to implement functions such as resource scheduling, wireless resource management, and wireless access control for the terminal device. For example, it may be an evolution base station (evolution nodeB, eNB), a generation base station (generation nodeB, gNB), a transmission receive point (TRP), a transmission point (TP), and some other access nodes. According to a size of a provided service coverage area, the base station may further be classified into a macro base station for providing a macro cell, a pico base station for providing a pico cell, and a femto base station for providing a femto cell. With continuous evolution of the wireless communication technologies, a future base station may also adopt other names.

The terminal device may also be referred to as a terminal, user equipment (UE), a mobile station, a mobile terminal, etc. Exemplarily, the terminal device may be a mobile phone, a tablet computer, a computer with a wireless transceiver function, a virtual reality terminal, an augmented reality terminal, a wireless terminal in industrial control, a wireless terminal in unmanned driving, a wireless terminal in remote surgery, a wireless terminal in transportation safety, a wireless terminal in a smart city, a wireless terminal in a smart home, and so on. The embodiments of the present disclosure do not limit the specific device form adopted by the terminal.

Exemplarily, the first node 11 is a first base station, and the second node 12 is a second base station, and the first base station and the second base station communicate via a wireless channel. For another example, the first node 11 is a first terminal, and the second node 12 is a second terminal, and the first terminal and the second terminal communicate via a wireless channel. For another example, the first node 11 is a repeater, and the second node 12 is a base station, and the base station and the repeater communicate via a wireless channel. For another example, the first node 11 is a terminal, and the second node 12 is a repeater, and the repeater and the terminal communicate via a wireless channel. For another example, the first node 11 is a first repeater, and the second node 12 is a second repeater, and the first repeater and the second repeater communicate via a wireless channel. For another example, the first node 11 is a base station, and the second node 12 is a satellite, and the satellite and the base station communicate via a wireless channel. For another example, the first node 11 is a satellite, and the second node 12 is a base station, and the base station and the satellite communicate via a wireless channel. For another example, the first node 11 is a terminal, and the second node 12 is a satellite, and the satellite and the terminal communicate via a wireless channel. For another example, the first node 11 is a satellite, and the second node 12 is a terminal, and the terminal and the satellite communicate via a wireless channel. For another example, the first node 11 is a ground device, and the second node 12 is an aircraft, and the aircraft and the ground device communicate via a wireless channel. For another example, the first node 11 is a first aircraft, and the second node 12 is a second aircraft, and the first aircraft and the second aircraft communicate via a wireless channel.

It needs to be noted that FIG. 1 is only an exemplary framework diagram, the number of devices or nodes, and names of the respective devices included in FIG. 1 are not limited, and in addition to the functional nodes shown in FIG. 1, the communication system may further include other nodes or devices, such as a core network device.

The system architectures and service scenarios described in the embodiments of the present disclosure are intended to more clearly illustrate the technical solutions of the embodiments of the present disclosure, and do not constitute a limitation on the technical solutions provided in the embodiments of the present disclosure. Those ordinary skilled in the art may know that with evolution of the network architectures and emergence of new service scenarios, the technical solutions provided in the embodiments of the present disclosure are also applicable to similar technical problems.

The embodiments provided in the present disclosure are exemplarily introduced below with reference to the drawings of the specification.

As shown in FIG. 2, the present disclosure provides a method for sending precoding matrix information, where the method is applied to a first node, and the method includes the following steps.

In S101: receive first configuration information, where the first configuration information is used to indicate K time points, and K is a positive integer greater than 1.

Exemplarily, the time points may be time points represented in various measurement modes. For example, the above time points are slots, that is, the first configuration information is used to indicate K slots. For another example, the above time points are orthogonal frequency division multiplexing (OFDM) symbols, that is, the first configuration information is used to indicate K OFDM symbols. For another example, the above time points are subframes, that is, the first configuration information is used to indicate K subframes. For another example, the above time points are radio frames, that is, the first configuration information is used to indicate K radio frames. For another example, the above time points are milliseconds, that is, the first configuration information is used to indicate K milliseconds.

In some embodiments, the above K time points may refer to K time instants, and may also indicate K time periods, and the K time points are used to reflect to the time corresponding to a precoding matrix or precoding matrix information, that is, the time corresponding to the precoding matrix or the precoding matrix information. Thus, the precoding matrix or the precoding matrix information may be determined based on channel states at the K time points.

The precoding matrix may be understood as weight coefficients applied to antenna ports, or a vector or a matrix composed of the weight coefficients applied to the antenna ports. The precoding matrix may preprocess a signal before signal transmission, to improve transmission efficiency and reliability of the signal. Moreover, by applying the precoding matrix matching the channel state on multiple antenna ports, the multiple-antenna technology is implemented, so as to improve performance of transmitted data. An essence of the precoding matrix is to perform a series of linear transformations on a transmitted signal at a transmitting end, so as to counteract interference and noise of a channel to the signal.

In addition, the first node may receive the first configuration information sent from the second node. Moreover, the first configuration information indicates K time points, so that the first node may select M time points from the K time points.

Exemplarily, the first configuration information indicating the K time points at least includes the following several possible implementations.

Implementation 1: the first configuration information includes K time points.

Exemplarily, the K time points may be listed in the first configuration information. For example, the K time points are K slots, and the K slot points are respectively an n₀-th slot, an n₁-th slot, ..., an n_{K-1}-th slot. For another example, the K slot points are respectively an n₀-th symbol, an n₁-th symbol, ..., an n_{K-1}-th symbol, etc. Similarly, the K time points may also be K OFDM symbols, K OFDM subframes, etc., which are not enumerated one by one.

It needs to be noted that the first configuration information may directly list each time point of the K time points, and in this way, flexibility of indicating the K time points may be improved, so that the K time points possibly corresponding to precoding matrices that need to be acquired may be accurately represented based on actual requirements, and in this way, unnecessary other time points may also be avoided from being introduced, thereby avoiding an increase in overhead for the first communication node to feed back precoding matrices.

Implementation 2: the first configuration information includes a time offset value of each of the K time points relative to a reference time point.

Exemplarily, the first configuration information may include offset time lengths of the K time points relative to the reference time point, so that the K time points may be determined based on the offset time lengths and the reference time point. For example, the offset time lengths of the K time points relative to the reference time point included in the first configuration information may be n₀ slots, n₁ slots, ..., n_{K-1} slots. For another example, the first configuration information lists that the offset time lengths of the K time points relative to a first reference time point are respectively: n₀ time periods, n₁ time periods, ..., n_{K-1} time periods. Similarly, the offset time lengths of the K time points relative to the first reference time point may also be K OFDM symbols, K OFDM subframes, etc., which are not enumerated one by one herein.

It needs to be noted that the first configuration information lists the offset time lengths of the K time points relative to the first reference time point, and in this way, flexibility of indicating the K time points may be improved, for example, the offset time length of a certain time point may be separately adjusted, so as to individually adjust this time point, and the reference time point may also be adjusted, so as to adjust positions of the K time points overall, to enable the K time points to be within a range of interest, thereby avoiding introducing time points of no interest, thus saving overhead for feeding back precoding matrices.

Implementation 3: the first configuration information indicates a first time point among the K time points, and time offset values of remaining time points relative to the first time point.

Exemplarily, the first configuration information may indicate a first time point in time order, and offset time lengths of the remaining time points among the K time points relative to the first time point.

It needs to be noted that a value range of the offset time lengths of the remaining time points relative to the first time point is smaller than a value range of the remaining time points, so that resource overhead for indicating the offset time lengths of the remaining time points relative to the first time point in the configuration information will be reduced.

In some embodiments, indicating the first time point among the K time points includes: indicating an event occurring at the first time point.

In this way, the first time point may be indicated by indicating the event occurring at the first time point, so that it is beneficial to focus the K time points within a time range related to the indicated event, thereby acquiring interested precoding matrix information related to the indicated event.

Exemplarily, indicating the first time point among the K time points includes any one of: indicating an event, where the first time point has a preset time offset value from a time point at which the event occurs.

In an example, the event occurring at the first time point may be indicated.

For example, the event occurring at the first time point includes transmitting an acknowledgment (ACK) corresponding to a physical downlink shared channel (PDSCH) data. For example, PDSCH data is transmitted at an n-th slot, and an acknowledgment corresponding to the PDSCH data is transmitted at an (n+k)-th slot, and in this case, the (n+k)-th slot may be the above first time point.

For another example, an event occurring at the first time point includes transmitting PDSCH data corresponding to an acknowledgment (ACK). For example, PDSCH data is transmitted at an n-th slot, and an acknowledgment corresponding to the PDSCH data is transmitted at an (n+k)-th slot, and in this case, the n-th slot may be the above first time point.

Since correct transmission of PDSCH data corresponds to a channel state at a time point at which PDSCH data is transmitted correctly, the K time points at which precoding matrix information needs to be acquired may be determined according to the time point at which PDSCH data is transmitted correctly, and in this way, performance of PDSCH data transmission may be improved, and resource overhead for transmitting the precoding matrix information may be reduced.

For another example, an event occurring at the first time point includes transmitting a negative acknowledgment (NACK) corresponding to PDSCH data. For example, PDSCH data is transmitted at an n-th slot, and a negative acknowledgment corresponding to the PDSCH data is transmitted at an (n+k)-th slot, and the (n+k)-th slot may be the above first time point.

For another example, an event occurring at the first time point includes transmitting PDSCH data corresponding to a negative acknowledgment (NACK). For example, PDSCH data is transmitted at an n-th slot, and a negative acknowledgment corresponding to the PDSCH data is transmitted at an (n+k)-th slot, and the n-th slot may be the above first time point.

Since incorrect transmission of PDSCH data corresponds to a channel state at a time point at which PDSCH data is transmitted incorrectly, the K time points at which precoding matrix information needs to be acquired may be determined according to the time point at which PDSCH data is transmitted incorrectly, and in this way, performance of PDSCH data transmission may be improved, and resource overhead for transmitting the precoding matrix information may be reduced.

For another example, an event occurring at the first time point is occurrence of a beam failure. For example, a beam failure or a beam invalidation occurs at an n-th slot, and the n-th slot may be the above first time point.

Since occurrence of a beam failure corresponds to a channel state at a time point at which the beam failure occurs, the K time points at which precoding matrix information needs to be acquired may be determined according to the time point at which the beam failure occurs, and in this way, performance of PDSCH data transmission may be improved, and resource overhead for transmitting the precoding matrix information may be reduced.

For another example, an event occurring at the first time point includes generation of beam establishment. For example, beam establishment is generated at an n-th slot, and the n-th slot may be the above first time point.

Since generation of beam establishment corresponds to a channel state at a time point at which beam establishment is generated, the K time points at which precoding matrix information needs to be acquired may be determined according to the time point at which beam establishment is generated, and in this way, performance of PDSCH data transmission may be improved, and resource overhead for transmitting the precoding matrix information may be reduced.

In another example, it may be indicated that the first time point has a preset time offset value from a time point at which an event occurs.

Exemplarily, the first configuration information indicating the first time point in the time order, includes indicating an event, where the first time point has a predetermined time offset length from the time point at which the event occurs.

For example, the event includes transmitting an acknowledgment (ACK) corresponding to PDSCH data. For example, PDSCH data is transmitted at an n-th slot, and an acknowledgment corresponding to the PDSCH data is transmitted at an (n+k)-th slot, and the (n+k)-th slot is the time point at which the event occurs. Thus, a time offset value of the first time point from the (n+k)-th slot may be indicated.

For another example, the event includes transmitting PDSCH data corresponding to an acknowledgment (ACK). For example, PDSCH data is transmitted at an n-th slot, and an acknowledgment corresponding to the PDSCH data is transmitted at an (n+k)-th slot, and the n-th slot is the time point at which the event occurs. Thus, a time offset value of the first time point from the n-th slot may be indicated.

Since correct transmission of PDSCH data corresponds to a channel state at a time point at which PDSCH data is transmitted correctly, the K time points at which precoding matrix information needs to be acquired may be determined according to the time point at which PDSCH data is transmitted correctly, so as to improve performance of PDSCH data transmission, and reduce resource overhead for transmitting the precoding matrix information.

For another example, the event includes transmitting a negative acknowledgment character (NACK) corresponding to PDSCH data. For example, PDSCH data is transmitted at an n-th slot, and a negative acknowledgment corresponding to the PDSCH data is transmitted at an (n+k)-th slot, and the (n+k)-th slot is the time point at which the event occurs. Thus, a time offset value of the first time point from the (n+k)-th slot may be indicated.

For another example, the event includes transmitting PDSCH data corresponding to a negative acknowledgment (NACK). For example, PDSCH data is transmitted at an n-th slot, and a negative acknowledgment corresponding to the PDSCH data is transmitted at an (n+k)-th slot, and the n-th slot is the time point at which the event occurs. Thus, a time offset value of the first time point from the n-th slot may be indicated.

Since incorrect transmission of PDSCH data corresponds to a channel state at a time point at which PDSCH data is transmitted incorrectly, the K time points at which precoding matrix information needs to be acquired may be determined according to the time point at which PDSCH data is transmitted incorrectly, so as to improve performance of PDSCH data transmission, and reduce resource overhead for transmitting the precoding matrix information.

For another example, the event includes occurrence of a beam failure. For example, a beam failure or a beam invalidation occurs at an n-th slot, and the n-th slot is the time point at which the event occurs. Thus, a time offset value of the first time point from the n-th slot may be indicated.

Since occurrence of a beam failure corresponds to a channel state at a time point at which the beam failure occurs, the K time points at which precoding matrix information needs to be acquired may be determined according to the time point at which the beam failure occurs, so as to improve performance of PDSCH data transmission, and reduce resource overhead for transmitting the precoding matrix information.

For another example, the event includes generation of beam establishment. For example, beam establishment is generated at an n-th slot, and the n-th slot is the time point at which the event occurs. Thus, a time offset value of the first time point from the n-th slot may be indicated.

It needs to be noted that the first time point has a predetermined time offset length from the time point at which the event occurs. Generation of beam establishment corresponds to a channel state at a time point at which beam establishment is generated, therefore, the K time points at which precoding matrix information needs to be acquired may be determined according to the time point at which beam establishment is generated, so as to improve performance of PDSCH data transmission, and reduce resource overhead for transmitting the precoding matrix information.

Implementation 4: the first configuration information is used to indicate the K time points, including: indicating a time offset value of a first time point among the K time points relative to a reference time point, and time offset values of remaining time points relative to the first time point.

Exemplarily, the first configuration information indicates an offset time length of a first time point in the time order relative to a reference time point, and offset time lengths of remaining time points relative to the first time point.

Since a value range of the first time point is relatively large compared with a value range of the offset time length of the first time point relative to the reference time point, resource overhead for indicating the first time point may be reduced by indicating the offset time length of the first time point in the time order relative to the reference time point.

In some embodiments, the first configuration information is further used to indicate the reference time point.

Exemplarily, the first configuration information is further used to indicate the reference time point, including: indicating an event occurring at the reference time point. In some embodiments, the event includes any one of:
transmitting an acknowledgement indication corresponding to data of a physical shared channel;
transmitting data of a physical shared channel corresponding to an acknowledgement indication;
transmitting a negative indication corresponding to data of a physical shared channel;
transmitting data of a physical shared channel corresponding to a negative indication;
a beam failure;
beam establishment.

That is, the reference time point may be indicated by indicating the event occurring at the reference time point. Thus, it is beneficial to focus the K time points within a time range related to the indicated event, thereby acquiring interested precoding matrix information related to the indicated event.

For example, an event occurring at a reference time point includes transmitting an acknowledgment (ACK) corresponding to PDSCH data. For example, PDSCH data is transmitted at an n-th slot, and an acknowledgment corresponding to the PDSCH data is transmitted at an (n+k)-th slot, and the (n+k)-th slot is the above reference time point.

For another example, an event occurring at a reference time point includes transmitting PDSCH data corresponding to an acknowledgment (ACK). For example, PDSCH data is transmitted at an n-th slot, and an acknowledgment character corresponding to the PDSCH data is transmitted at an (n+k)-th slot, and the n-th slot is the above reference time point.

Since correct transmission of PDSCH data corresponds to a channel state at a time point at which PDSCH data is transmitted correctly, the K time points at which precoding matrix information needs to be acquired may be determined according to the time point at which PDSCH data is transmitted correctly, so as to improve performance of PDSCH data transmission, and reduce resource overhead for transmitting the precoding matrix information.

For another example, an event occurring at a reference time point includes transmitting a negative acknowledgment (NACK) corresponding to PDSCH data. For example, PDSCH data is transmitted at an n-th slot, and a negative acknowledgment corresponding to the PDSCH data is transmitted at an (n+k)-th slot, and the (n+k)-th slot is the above reference time point.

For another example, an event occurring at a reference time point includes transmitting PDSCH data corresponding to a negative acknowledgment (NACK). For example, PDSCH data is transmitted at an n-th slot, and a negative acknowledgment corresponding to the PDSCH data is transmitted at an (n+k)-th slot, and the n-th slot is the above reference time point.

Since incorrect transmission of PDSCH data corresponds to a channel state at a time point at which PDSCH data is transmitted incorrectly, the K time points at which precoding matrix information needs to be acquired may be determined according to the time point at which PDSCH data is transmitted incorrectly, so as to improve performance of PDSCH data transmission, and reduce resource overhead for transmitting the precoding matrix information.

For another example, an event occurring at a reference time point includes occurrence of a beam failure. For example, a beam failure or a beam invalidation occurs at an n-th slot, and the n-th slot is the above reference time point.

Occurrence of a beam failure corresponds to a channel state at a time point at which the beam failure occurs, therefore, the K time points at which precoding matrix information needs to be acquired may be determined according to the time point at which the beam failure occurs, so as to improve performance of PDSCH data transmission, and reduce resource overhead for transmitting the precoding matrix information.

For another example, an event occurring at a reference time point includes generation of beam establishment. For example, beam establishment is generated at an n-th slot, and the n-th slot is the reference time point.

Since generation of beam establishment corresponds to a channel state at a time point at which beam establishment is generated, the K time points at which precoding matrix information needs to be acquired may be determined according to the time point at which beam establishment is generated, so as to improve performance of PDSCH data transmission, and reduce resource overhead for transmitting the precoding matrix information.

Implementation 5: the first configuration information is used to indicate the K time points, including: a time offset value of a first time point among the K time points relative to a reference time point, and a time offset value of two adjacent time points among the K time points.

Exemplarily, the first configuration information indicates an offset time length of a first time point in time order relative to a reference time point, and an offset time length between adjacent time points, so as to indicate the K time points.

For example, the K time points may be respectively a 1st time point, a 2nd time point, ..., a K-th time point in the time order. Thus, the first configuration information may respectively indicate an offset time length of the 1st time point relative to the reference time point, an offset time length of the 2nd time point relative to the 1st time point, an offset time length of the 3rd time point relative to the 2nd time point, ..., an offset time length of the K-th time point relative to the (K-1)-th time point.

In this way, since a value of the offset time length of the K-th time point relative to the (K-1)-th time point is smaller than a value of the offset time length of the K-th time point relative to the 1st time point, or the value of the offset time length of the K-th time point relative to the (K-1)-th time point is smaller than a value of the offset time length of the K-th time point relative to the reference time point, using the offset time length of the K-th time point relative to the (K-1)-th time point to indicate the K-th time point can save resource overhead.

In some embodiments, the reference time point may further be indicated by the first configuration information, or be indicated by another configuration information different from the first configuration information, or be indicated by one signaling, etc. In addition, an event may also be directly indicated to indicate the reference time point, where a time point at which the event occurs is the reference time point. Alternatively, an event may also be indicated, where a time point having a time offset length from a time point at which the event occurs is the reference time point. Alternatively, the reference time point may also be predetermined by a protocol.

In some embodiments, the offset time lengths between adjacent time points may also be indicated in order of the K time points.

Exemplarily, the first configuration information may indicate the offset time length of the first time point relative to the reference time point, and the offset time lengths between adjacent time points, in various orders.

For example, the indication order may be indicating the offset time lengths between adjacent time points in order of the K time points, for example: an offset time length of the 1st time point relative to the reference time point, an offset time length of the 2nd time point relative to the 1st time point, an offset time length of the 3rd time point relative to the 2nd time point, ..., an offset time length of the K-th time point relative to the (K-1)-th time point.

For another example, the indication order may also be an offset time length of the K-th time point relative to the (K-1)-th time point, an offset time length of the (K-1)-th time point relative to the (K-2)-th time point, ..., an offset time length of the 2nd time point relative to the 1st time point, an offset time length of the 1st time point relative to the reference time point.

In this way, by indicating the offset time lengths between adjacent time points in order of the K time points, the first communication node may calculate, upon receiving an offset time length of a time point, the corresponding time point; without waiting for all offset time lengths to be received completely. So, the complexity of the system is reduced.

Implementation 6: the first configuration information is used to indicate the K time points, including: time offset values of other time points except a first time point among the K time points relative to a reference time point.

Exemplarily, the first configuration information indicates offset time lengths of remaining time points except a first time point in time order relative to the first time point, and first signaling indicates the first time point, or the first signaling indicates an offset time length of the first time point relative to a reference time point.

In some embodiments, the first time point is indicated by the first signaling; or an event occurring at the first time point is a predefined event.

It needs to be noted that the first configuration information may be adopted to indicate the offset time lengths of the remaining time points except the first time point relative to the first time point, so that relative positions of the K time points in a time dimension may be controlled by the first configuration information.

In addition, the first signaling indicates the first time point, or the first signaling indicates the offset time length of the first time point relative to the reference time point, so that the first signaling may control an overall position of the K time points in the time dimension. Moreover, signaling has strong timeliness and carries a small load, and using signaling to indicate the first time point, or the first signaling to indicate the offset time length of the first time point relative to the reference time point, may achieve dynamically indicating the K time points with a small amount of signaling load, thereby timely and accurately acquiring the required precoding matrix information of the K time points, which may avoid unnecessarily increasing the number of time points and thus increasing resource overhead for transmitting the precoding matrix information.

Implementation 7: the first configuration information is used to indicate the K time points, including: time offset values of other time points except a first time point among the K time points relative to the first time point.

Exemplarily, the first configuration information may indicate offset time lengths of remaining time points except a first time point in time order relative to the first time point, or the first configuration information indicates offset time lengths between adjacent time points of the K time points in time order.

In some embodiments, the first time point is indicated by first signaling; or, an event occurring at the first time point is a predefined event.

For example, the event occurring at the first time point is predetermined by a protocol. For another example, the event occurring at the first time point is pre-reported by the first communication node to the second communication node. For another example, the event occurring at the first time point is pre-indicated by the second communication node to the first communication node.

Implementation 8: the first configuration information is used to indicate the K time points, including: time offset values of two adjacent time points among the K time points.

Exemplarily, the first configuration information indicates offset time lengths between adjacent time points of the K time points in time order, and first signaling indicates a first time point, or the first signaling indicates an offset time length of a first time point relative to a reference time point.

In some embodiments, the first time point is indicated by the first signaling; or, an event occurring at the first time point is a predefined event.

It needs to be noted that the first configuration information may be adopted to indicate the offset time lengths between adjacent time points of the K time points in the time sequence, so that the first configuration information controls relative positions of the K time points in a time dimension.

In addition, the first signaling indicates the first time point, or the first signaling indicates the offset time length of the first time point relative to the reference time point, so that the first signaling may control an overall position of the K time points in the time dimension. Moreover, signaling has strong timeliness and carries a small load, and using signaling to indicate the first time point, or the first signaling to indicate the offset time length of the first time point relative to the reference time point, may achieve dynamically indicating the K time points with a small amount of signaling load, thereby timely and accurately acquiring required precoding matrix information of the K time points, and avoiding unnecessarily increasing the number of time points and thus increasing resource overhead for transmitting the precoding matrix information.

In a possible implementation, the first configuration information provided in the present disclosure may further be used to indicate a value of M.

Exemplarily, the first node receives the first configuration information from the second node, where the first configuration information further indicates the value of M. Alternatively, the first node receives second configuration information from the second node, where the second configuration information indicates the value of M. Alternatively, the first node receives first signaling, where the first signaling indicates the value of M. That is, the first node may receive indication information from the second node, where the indication information indicates the value of M.

In some embodiments, the first configuration information includes a first parameter.

In an example, the value of M is determined according to the first parameter and a value of K.

Exemplarily, the value of M may be determined according to a product of the value of K and the first parameter. For example, the value of M is the product of the value of K and the first parameter. For another example, the value of M is a product function of the value of K and the first parameter.

Thus, in a case of a same value of the first parameter, the value of M may vary with the value of K, therefore the value of M varying in a large range may be determined by the value of the first parameter varying in a small range, while maintaining that the precoding matrices of the M time points may accurately reflect the precoding matrices of the K time points. Moreover, resource overhead for indicating the value of the first parameter varying in a small range is relatively small, thereby achieving indicating the value of M varying in a large range with relatively small resource overhead. In addition, it may also be simultaneously maintained that the precoding matrices of the M time points may accurately reflect the precoding matrices of the K time points.

In another example, the value of K is determined according to the first parameter.

Exemplarily, candidate values of K are determined according to the value of the first parameter. That is, the value of K in the first configuration information may be selected from the candidate values of K, where the candidate values of K are determined according to the value of the first parameter.

In this way, the value of K in the first configuration information may be selected from the candidate values of K, thereby avoiding the system processing too many values of K, so as to reduce the complexity of the system. Moreover, the candidate values of K are determined according to the value of the first parameter, so that the candidate values of K may feed back time-domain correlation of the precoding matrices, to avoid feeding back too many precoding matrices, thereby saving resource overhead for feedback. In addition, feeding back too few precoding matrices may also be avoided, thereby ensuring accuracy of the obtained precoding matrices at the K time points.

In yet another example, the first parameter is determined according to the value of K.

Exemplarily, candidate values of the first parameter are determined according to the value of K. That is, the value of the first parameter in the first configuration information may be selected from the candidate values of the first parameter.

In this way, the number of values of the first parameter may be reduced, thereby reducing the complexity of the system, and saving overhead for indicating the first parameter.

In addition, the candidate values of the first parameter are determined according to the value of K, so that the candidate values of the first parameter may feed back time-domain correlation of the precoding matrices, to avoid feeding back too many precoding matrices, thereby saving resource overhead for feedback. In addition, feeding back too few precoding matrices may also be avoided, thereby ensuring accuracy of the obtained precoding matrices at the K time points.

In another example, the first parameter and the value of K are a first value combination, the first value combination is determined among a plurality of candidate value combinations, and each candidate value combination is used to indicate a group of a candidate value of the first parameter and a candidate value of K.

Exemplarily, combinations of candidate values of K and candidate values of the first parameter are predefined, and the configuration information is selected from the candidate values of the combinations.

In this way, it may be possible to reasonably utilize time-domain correlation of precoding matrices according to the precoding matrices of the M time points to obtain precoding matrices of the K time points, and ensure accuracy of the precoding matrices of the K time points, and avoid feeding back too many precoding matrices, thereby saving resource overhead for feedback.

In S102: select M time points from the K time points.

In a possible implementation, the first node may first determine a value of M.

Exemplarily, the first node may determine the value of M. Thus, the first node may determine a relatively appropriate value of M according to mastery of a channel state, thereby avoiding feeding back precoding matrices at too many time points, and meanwhile also ensuring that the second node may obtain sufficiently accurate precoding matrices of the K time points by the precoding matrices of the M time points.

In some embodiments, the value of M is determined among a plurality of candidate values of M indicated by the second node.

Exemplarily, the second node indicates the candidate values of M by the first configuration information. Alternatively, the second node indicates the candidate values of M by another configuration information different from the first configuration information.

In some embodiments, the value of M is determined based on the value of K.

Exemplarily, the candidate values of M are determined according to the value of K, and the first node selects the value of M from the candidate values of M determined according to the value of K. Further, the first node may also report the determined value of M to the second node, so as to facilitate the second node to receive the reported information of the M precoding matrices.

In a possible implementation, the value of M is determined according to a number of reference signal resources or a time interval between reference signal resources.

Exemplarily, the first node may also receive second configuration information from the second node, where the second configuration information indicates reference signal resources, and the value of M is determined according to the number of reference signal resources or the time interval between the reference signal resources.

For example, a number corresponding to the reference signal resources is P1, and the value of M may be Q1. A number corresponding to the reference signal resources is P2, and the value of M may be Q2. P1, P2, Q1, Q2 are positive integers, and Q1, Q2 are less than K.

For another example, a ratio of the number of reference signal resources to K is R. Corresponding to R being greater than 1, the value of M is Q1. Corresponding to R being less than 1, the value of M is Q2.

For another example, a ratio of the number of reference signal resources to K is R. Corresponding to R being greater than 1, the value of M is less than K/2. Corresponding to R being less than 1, the value of M is greater than K/2. Corresponding to R being equal to 1, the value of M is equal to K/2.

For another example, a time interval between the reference signal resources is P1 time units, and the value of M is Q1. A time interval between the reference signal resources is P2 time units, and the value of M is Q2. P1, P2, Q1, Q2 are positive integers, and Q1, Q2 are less than K.

For another example, a ratio of the time interval between the reference signal resources to K is R. Corresponding to R being greater than 1, the value of M is Q1. Corresponding to R being less than 1, the value of M is Q2.

For another example, a ratio of the time interval between the reference signal resources to K is R. Corresponding to R being greater than 1, the value of M is less than K/2. Corresponding to R being less than 1, the value of M is greater than K/2. Corresponding to R being equal to 1, the value of M is equal to K/2.

In addition, a first parameter may also be determined according to the interval and the number.

For example, a ratio of the number of reference signal resources to K is R, and a ratio of the time interval of the reference signal resources to an interval between two adjacent time points among the K time points is S. A first coefficient is a product of R and S. Alternatively, the first coefficient is a product of the product of R and S, and a coefficient. For another example, the first coefficient is a ratio of R to S; or, the first coefficient is a function of the ratio of R to S.

In some embodiments, the first configuration information is used to indicate the K time points, including: the first configuration information is used to indicate a second parameter and time point information. The value of K is determined according to the number of reference signal resources and the second parameter.

In some embodiments, the first configuration information is further used to indicate a third parameter; where the value of M is determined according to the number of reference signal resources and the third parameter.

In some embodiments, the value of M may also be determined according to a numerical relationship between a first time interval and a second time interval of reference signal resources, and the value of K.

In some embodiments, the value of M may also be determined based on a time interval between the M time points.

In some embodiments, the value of M may further be determined based on the number of reference signal resources and the value of K.

In some embodiments, the M time points satisfy at least one of:
the M time points including a first time point among the K time points;
the M time points including a last time point among the K time points;
the M time points being indicated by a second node among the K time points;
the M time points being determined by the first node;
D time points among the M time being indicated by a second node, and E time points among the M time being determined by the first node;
F time points among the M time being preset, and E time points among the M time being determined by the first node.

Exemplarily, the first node may divide the K time points into M groups, and select one time point from each group, where precoding matrices of time points in a same group may be mutually derived, that is, in the same group, a precoding matrix of another time point in the group may be derived and determined based on a precoding matrix of one time point in the group. In some embodiments, precoding matrices of time points in the same group may be the same, so that in the same group, a precoding matrix of another time point in the group may be determined based on a precoding matrix of one time point in the group.

Exemplarily, the K time points may be divided into M groups, one time point is selected from each group, and M time points are selected in total from all the groups.

For example, K=10, and corresponding time points include time instants {0,1,2,3,4,5,6,7,8,9}, which may be then divided into M=3 groups. Time instants of a first group are {0,6,8}, a time instant 6 is selected as one of the M time points. Time instants of a second group are {1,2,5,9}, a time instant 1 is selected as one of the M time points. Time instants of a third group are {3,4,7}, a time instant 4 is selected as one of the M time points.

Exemplarily, the K time points may be divided into D groups, at least one time point is selected from each group, and M time points are selected in total from all the groups.

For example, K=10, and corresponding time instants are {0,1,2,3,4,5,6,7,8,9}, which are divided into D=3 groups, where time instants of a first group are {0,6,8}, and a time instant 6 is selected as one of the M time points. Time instants of a second group are {1,2,5,9}, a time instant 1 and a time instant 9 are selected as ones of the M time points. Time instants of a third group are {3,4,7}, a time instant 3 is selected as one of the M time points. That is, M=4 time points are selected in total.

In S103: send channel state information based on the M time points.

The channel state information includes precoding matrix information of the M time points, and M is a positive integer less than K.

It needs to be noted that the first configuration information indicates K time points, and the first node may select M time points from the K time points, and feed back precoding matrix information corresponding to the M time points. K and M are positive integers, and M is less than K. That is, the first configuration information indicating K time points means that the second node needs to know precoding matrices or precoding matrix information at the K time points. However, feeding back the precoding matrix information at the K time points by the first node will occupy a large amount of resource overhead, and resource overhead for feedback may be reduced, by feeding back the precoding matrix information at the M time points which is smaller than K.

The channel has time-variability and also has time correlation. The second node may need to obtain channel prediction values in a relatively long time range, for example, K time points. The channel may change slowly or may change fast within this time range. It is also possible that the channel changes fast in some time periods and changes slowly in other time periods. It is also possible that the channel is simple but changes drastically, or the channel is complex but changes slowly. A precoding matrix is determined according to the channel and needs to match the channel, therefore, the precoding matrix also has the same time variability characteristic, and according to the time variability characteristic of the precoding matrix, the first node selects M time points from the K time points indicated by the first configuration information, and feeds back precoding matrices or precoding matrix information at the M time points.

Correspondingly, the second node may obtain precoding matrices at time points other than the M time points, according to the received precoding matrices or precoding matrix information at the M time points and time correlation of the precoding matrices. Thus, it is achieved to obtain precoding matrices or precoding matrix information at the K time points with relatively small feedback resources.

In addition, according to the time variability characteristic of the precoding matrices, effects of obtaining precoding matrices at K time points from precoding matrices at different M time points among the K time points are not the same. For example, if positions of the M time points among the K time points are appropriate, the M time points may be used to reflect a time variability law of precoding matrices at the K time points, and precoding matrices at the K time points with high accuracy may also be obtained by the M time points. However, if positions of the M time points among the K time points are inappropriate, and the M time points cannot reflect the time variability law of the precoding matrices at the K time points, precoding matrices other than the M time points cannot be obtained by the precoding matrices at the M time points. Alternatively, if positions of the M time points among the K time points are inappropriate, and the M time points cannot sufficiently reflect the time variability law of precoding matrices at the K time points, accuracy of the precoding matrices at the K time points obtained from the precoding matrices at the M time points will have a loss, and a magnitude of the accuracy loss is related to a degree to which the precoding matrices at the M time points reflect the time variability law of the precoding matrices at the K time points. The M time points are selected from the K time points by the first node, so that appropriate positions of the M time points among the K time points may be determined, which enables the precoding matrices at the selected M time points to reflect the time variability law of the precoding matrices at the K time points, thereby achieving that the second node obtains high-accuracy precoding matrices or precoding matrix information at the K time points with relatively small feedback resources, and in this way, feedback resource overhead for obtaining the precoding matrices at the K time points may be reduced, and accuracy of the obtained precoding matrices at the K time points may also be improved.

Alternatively, the second node improves accuracy of precoding matrices at time points other than the M time points according to the received high-accuracy precoding matrices or precoding matrix information at the M time points and the time correlation of the precoding matrices, to obtain high-accuracy precoding matrices or precoding matrix information at the K time points with relatively small feedback resources. According to the time variability characteristic of the precoding matrices, effects of improving precoding matrices at time points other than the M time points among the K time points by precoding matrices at different M time points among the K time points are not the same.

For example, if positions of the M time points among the K time points are appropriate, and the M time points can reflect the time variability law of the precoding matrices at the K time points, accuracy of precoding matrices at time points other than the M time points among the K time points may be improved by the precoding matrices at the M time points. If positions of the M time points among the K time points are inappropriate and the M time points cannot reflect the time variability law of the precoding matrices at the K time points, accuracy of precoding matrices other than the M time points cannot be improved by the precoding matrices at the M time points; or, if the positions of the M time points among the K time points are inappropriate, and the M time points cannot sufficiently reflect the time variability law of the precoding matrices at the K time points, accuracy of the precoding matrices at the K time points improved by the precoding matrices at the M time points will have a loss, and the magnitude of the accuracy loss is related to the degree to which the precoding matrices at the M time points reflect the time variability law of the precoding matrices at the K time points. The M time points are selected from the K time points by the first node, so that appropriate positions of the M time points among the K time points may be determined, so that the precoding matrices at the selected M time points reflect the time variability law of the precoding matrices at the K time points, to enable the second node to obtain high-accuracy precoding matrices or precoding matrix information at the K time points with relatively small feedback resources; thus, feedback resource overhead for obtaining the precoding matrices at the K time points is reduced, and accuracy of the obtained precoding matrices at the K time points is also improved.

Alternatively, the second node improves accuracy of precoding matrices at the M time points according to the received low-accuracy precoding matrices or precoding matrix information at the M time points and the time correlation of the precoding matrices, to obtain high-accuracy precoding matrices or precoding matrix information at the K time points with relatively small feedback resources. The precoding matrix information represents precoding matrices. The first node selects M time points from the K time points, and the M time points are not located at key positions and do not reflect the time variability law of the precoding matrices at the K time points. For example, the M time points are not located at fluctuation positions or peak and valley points in which elements in the precoding matrices change over time; and feeding back the precoding matrices at the M time points with relatively small resource overhead may reduce feedback resource overhead.

Correspondingly, according to the received low-accuracy precoding matrices at the M time points and high-accuracy precoding matrices at other time points, the second node utilizes the time correlation of the precoding matrices at the K time points to improve the precoding matrices at the M time points, thereby improving accuracy of the precoding matrices at the M time points. If the M time points are located at key positions and are fed back with relatively small resources, accuracy of the precoding matrices at the M time points is difficult to be improved by precoding matrices at other time points.

In a possible implementation, the channel state information does not include precoding matrix information of other N time points among the K time points except the M time points, N being equal to a difference between K and M.

In another possible implementation, the channel state information further includes precoding matrix information of other N time points among the K time points except the M time points, the precoding matrix information of the M time points is generated in a first mode, the precoding matrix information of the N time points is generated in a second mode, and N is equal to a difference between K and M.

Feedback resource overhead corresponding to the first mode is not equal to feedback resource overhead corresponding to the second mode.

Exemplarily, the first node selects M time points from the K time points, feeds back the precoding matrix information corresponding to the M time points in the first mode, and feeds back precoding matrix information corresponding to remaining time points in another mode (for example, a second mode), and feedback resource overhead of the another mode is not equal to the feedback resource overhead of the first mode.

In an example, a codebook type used in the second mode is different from a codebook type used in the first mode.

For example, in the first mode, a vector in the precoding matrix is composed of a single basis vector. In the second mode, a vector in the precoding matrix is formed by a linear combination of a plurality of basis vectors. Alternatively, in the first mode, a vector in the precoding matrix is formed by a linear combination of a plurality of basis vectors; in the second mode, a vector in the precoding matrix is composed of a single basis vector.

In another example, a number of elements in a codebook set used in the first mode is different from a number of elements in a codebook set used in the second mode.

The number of elements in the codebook set used in the first mode is less than the number of elements in the codebook set used in the second mode. Alternatively, the number of elements in the codebook set used in the first mode is greater than the number of elements in the codebook set used in the second mode.

In yet another example, a vector in the precoding matrix is formed by a linear combination of a plurality of basis vectors, and a number of basis vectors included in the combination in the first mode is different from a number of basis vectors included in the combination in the second mode.

For example, a vector in the precoding matrix is formed by a linear combination of a plurality of basis vectors, where the number of basis vectors included in the combination in the first mode is greater than the number of basis vectors included in the combination in the second mode. Alternatively, the number of basis vectors included in the combination in the first mode is less than the number of basis vectors included in the combination in the second mode.

In this way, reporting precoding matrices or precoding matrix information at all K time points in a mode with maximum overhead may be avoided, thereby reducing resource overhead for the second communication node to obtain precoding matrices at the K time points.

It needs to be noted that according to the time characteristic of the precoding matrices, the precoding matrices at some time points have high complexity and need to be fed back with relatively large resource overhead, to enable the second node to obtain high-accuracy precoding matrices. However, the precoding matrices at some time points have low complexity and need to be fed back with relatively small resource overhead only, to enable the second node to obtain high-accuracy precoding matrices.

Therefore, the first node selects M time points from the K time points, feeds back precoding matrices at the selected M time points in the first mode, and feeds back precoding matrices at the remaining K-M time points in the second mode. Resource overhead of the first mode is greater than resource overhead of the second mode. In this way, it is avoided that precoding matrices at the remaining K-M time points are fed back in a mode with high resource overhead, thereby saving feedback resource overhead. Alternatively, resource overhead of the first mode is less than resource overhead of the second mode. In this way, it is avoided that precoding matrices at the M time points are fed back in a mode with high resource overhead, thereby saving feedback resource overhead.

Moreover, according to the time variability characteristic of the precoding matrices, some time points are at key positions, the corresponding precoding matrices can reflect a time variability law of precoding matrices at the K time points, and some time points are at non-key positions, the corresponding precoding matrices cannot reflect or less reflect the time variability law of the precoding matrices at the K time points. Thus, for time points corresponding to key positions, the corresponding precoding matrices may be fed back with relatively high resource overhead. However, for time points at non-key positions, the corresponding precoding matrices may be fed back with relatively low resource overhead. Thus, resource overhead used for feedback is reduced overall, and accuracy of precoding matrices obtained by the second node is improved.

In some embodiments, feedback resource overhead of the precoding matrix information generated in the first mode is greater than feedback resource overhead of the precoding matrix information generated in the second mode.

For example, in the first mode, a vector in the precoding matrix is formed by a linear combination of a plurality of basis vectors; in the second mode, a vector in the precoding matrix is composed of a single basis vector.

For another example, the number of elements in the codebook set used in the first mode is greater than the number of elements in the codebook set used in the second mode.

For another example, a vector in the precoding matrix is formed by a linear combination of a plurality of basis vectors, where a number of basis vectors included in the combination in the first mode is greater than a number of basis vectors included in the combination in the second mode.

In addition, the value of M is less than the value of N.

That is, the first node selects M time points from the K time points, feeds back precoding matrix information corresponding to the M time points in the first mode, and feeds back precoding matrix information corresponding to remaining time points in the second mode. Resource overhead for feeding back the precoding matrix information corresponding to the M time points in the first mode is greater than overhead for feeding back the precoding matrix information corresponding to the remaining time points in the second mode, and M is less than or equal to K-M=N.

It needs to be noted that M is less than N, and the resource overhead of the first mode for feeding back the precoding matrix information corresponding to the M time points is greater than the resource overhead of the second mode for feeding back the precoding matrix information corresponding to the remaining time points. In this way, fewer time points may be selected to feed back the corresponding precoding matrix information in a feedback mode with high overhead and with high accuracy, thereby achieving effects of saving resource overhead and improving accuracy of fed-back precoding matrices.

In an example, the M time points may be selected according to complexity of precoding matrices. Alternatively, the M time points may also be selected according to whether the time points are at key positions. Moreover, M being less than or equal to N may further save resource overhead used for feedback.

M is less than or equal to N=K-M. For example, M is uK, where uK represents a product of u and K, and u is a real number less than or equal to 1/2. For another example, M is a rounded value of the product of u and K, and u is a real number less than or equal to 1/2. For another example, M is K/8, or a rounded value of K/8; for another example, M is K/4, or a rounded value of K/4.

In some embodiments, feedback resource overhead of the precoding matrix information generated in the first mode is less than feedback resource overhead of the precoding matrix information generated in the second mode.

Exemplarily, the first node selects M time points from the K time points, feeds back precoding matrix information corresponding to the M time points in the first mode, and feeds back precoding matrix information corresponding to remaining time points in the second mode. Moreover, resource overhead for feeding back the precoding matrix information corresponding to the M time points in the first mode is less than overhead for feeding back the precoding matrix information corresponding to the remaining time points in the second mode.

For example, in the first mode, a vector in the precoding matrix is composed of a single basis vector; in the second mode, a vector in the precoding matrix is formed by a linear combination of a plurality of basis vectors.

For another example, a number of elements in the codebook set used in the first mode is less than a number of elements in the codebook set used in the second mode.

For another example, a vector in the precoding matrix is formed by a linear combination of a plurality of basis vectors, where a number of basis vectors included in the combination in the first mode is less than a number of basis vectors included in the combination in the second mode.

In addition, the value of M is greater than the value of N.

That is, the first node selects M time points from the K time points, feeds back precoding matrix information corresponding to the M time points in the first mode, and feeds back precoding matrix information corresponding to remaining time points in the second mode. Resource overhead for feeding back the precoding matrix information corresponding to the M time points in the first mode is less than overhead for feeding back the precoding matrix information corresponding to the remaining time points in the second mode, and M is greater than K-M=N.

It needs to be noted that since M is greater than N, and the resource overhead of the first mode for feeding back the precoding matrix information corresponding to the M time points is less than the resource overhead of the second mode for feeding back the precoding matrix information corresponding to the remaining time points. In this way, more time points may be selected to feed back the corresponding precoding matrix information in a feedback mode with low overhead, thereby achieving effects of saving resource overhead and ensuring accuracy of the fed-back precoding matrices.

In an example, the M time points may be selected according to complexity of the precoding matrices. The M time points may also be selected according to whether the time points are at key positions. In addition, M being greater than or equal to K-M may further save resource overhead used for feedback.

M is greater than or equal to K-M=N. For example, M is uK, where uK represents a product of u and K, and u is a real number greater than or equal to 1/2. For another example, M is a rounded value of the product of u and K, and u is a real number greater than or equal to 1/2. For another example, M is 5K/8, or a rounded value of 5K/8; for another example, M is 3K/4, or a rounded value of 3K/4.

In some embodiments, the first node encodes precoding matrices to be fed back, and feeds back encoded precoding matrix information. Correspondingly, the second node receives the encoded precoding matrix information, and may recover precoding matrices according to the encoded precoding matrix information. A degree of similarity between the precoding matrices recovered by the second node and the precoding matrices transmitted by the first node is accuracy of the precoding matrices obtained by the second node.

In addition, a method for measuring the accuracy of the obtained precoding matrices is determining according to an error between the precoding matrices recovered by the second node and the precoding matrices transmitted by the first node. Another method for measuring the accuracy of the obtained precoding matrices is determining according to a cosine similarity between the precoding matrices recovered by the second node and the precoding matrices transmitted by the first node.

Based on the technical solutions provided in the present disclosure, the first node may determine M time points based on the K time points indicated by the first configuration information from the second node, and feed back precoding matrix information corresponding to the M time points, where M is less than K. In this way, resource overhead for feedback may be reduced, by feeding back the precoding matrix information at the M time points which is smaller than K. In addition, accuracy of the fed-back precoding matrices at the K time points may also be improved, by selecting appropriate M time points for feedback.

In some embodiments, as shown in FIG. 3, the present disclosure further provides a method for receiving precoding matrix information, where the method is applied to a second node, and the method includes the following steps.

In S201: send first configuration information, where the first configuration information is used to indicate K time points, and K is a positive integer greater than 1.

In some embodiments, the first configuration information includes the K time points.

In some embodiments, the first configuration information includes a time offset value of each of the K time points relative to a reference time point.

In some embodiments, the first configuration information is used to indicate the K time points, including: indicating a first time point among the K time points, and time offset values of remaining time points relative to the first time point.

In some embodiments, indicating the first time point among the K time points includes: indicating an event occurring at the first time point.

In some embodiments, indicating the first time point among the K time points includes any one of: indicating an event, where the first time point has a preset time offset value from a time point at which the event occurs.

In some embodiments, the first configuration information is used to indicate the K time points, including: indicating a time offset value of a first time point among the K time points relative to a reference time point, and time offset values of remaining time points relative to the first time point.

In some embodiments, the first configuration information is further used to indicate the reference time point.

In some embodiments, the first configuration information is further used to indicate the reference time point, including: indicating an event occurring at the reference time point.

In some embodiments, the event includes any one of:
transmitting an acknowledgement indication corresponding to data of a physical shared channel;
transmitting data of a physical shared channel corresponding to an acknowledgement indication;
transmitting a negative indication corresponding to data of a physical shared channel;
transmitting data of a physical shared channel corresponding to a negative indication;
a beam failure;
beam establishment.

In some embodiments, the first configuration information is used to indicate the K time points, including: a time offset value of a first time point among the K time points relative to a reference time point, and a time offset value of two adjacent time points among the K time points.

In some embodiments, the first configuration information is used to indicate the K time points, including: time offset values of other time points except a first time point among the K time points relative to a reference time point.

In some embodiments, the first configuration information is used to indicate the K time points, including: time offset values of other time points except a first time point, among the K time points relative to the first time point.

In some embodiments, the first configuration information is used to indicate the K time points, including: a time offset value of two adjacent time points among the K time points.

In some embodiments, the first time point is indicated by first signaling; or an event occurring at the first time point is a predefined event.

In some embodiments, the first configuration information is further used to indicate a value of M.

In some embodiments, the first configuration information includes a first parameter; the value of M is determined according to the first parameter and a value of K.

In some embodiments, the value of K is determined according to the first parameter.

In some embodiments, the first parameter is determined according to the value of K.

In some embodiments, the first parameter and the value of K are a first value combination, the first value combination is determined among a plurality of candidate value combinations, and each candidate value combination is used to indicate a group of a candidate value of the first parameter and a candidate value of K.

In S202: receive channel state information. The channel state information includes precoding matrix information of M time points selected from the K time points by a first node, and M is a positive integer less than K.

In some embodiments, the first node may determine the value of M, and then determine M time points among the K time points.

In some embodiments, the value of M is determined among a plurality of candidate values of M indicated by the second node.

In some embodiments, the value of M is determined based on the value of K.

In some embodiments, the value of M is determined according to a number of reference signal resources or a time interval between reference signal resources.

In an example, the second node may further send second configuration information to the first node, and correspondingly, the first node may further receive the second configuration information from the second node, where the second configuration information indicates reference signal resources, and the value of M is determined according to the number of reference signal resources or the time interval between the reference signal resources.

In some embodiments, the first configuration information is used to indicate the K time points, including: the first configuration information is used to indicate a second parameter and time point information; where the value of K is determined according to the number of reference signal resources and the second parameter.

In some embodiments, the first configuration information is further used to indicate a third parameter; where the value of M is determined according to the number of reference signal resources and the third parameter.

In some embodiments, the value of M is determined according to a numerical relationship between a first time interval and a second time interval of the reference signal resources, and the value of K.

In some embodiments, the value of M is determined based on a time interval between the M time points.

In some embodiments, the value of M is determined based on the number of reference signal resources and the value of K.

In some embodiments, the M time points satisfy at least one of:
the M time points including a first time point among the K time points;
the M time points including a last time point among the K time points;
the M time points being indicated by a second node among the K time points;
the M time points being determined by the first node;
D time points among the M time being indicated by a second node, and E time points among the M time being determined by the first node;
F time points among the M time being preset, and E time points among the M time being determined by the first node.

In some embodiments, the channel state information does not include precoding matrix information of other N time points among the K time points except the M time points, and N is equal to a difference between K and M.

In some embodiments, the channel state information further includes precoding matrix information of other N time points among the K time points except the M time points, the precoding matrix information of the M time points is generated in a first mode, the precoding matrix information of the N time points is generated in a second mode, and N is equal to a difference between K and M; where feedback resource overhead corresponding to the first mode is not equal to feedback resource overhead corresponding to the second mode.

In some embodiments, feedback resource overhead of the precoding matrix information generated in the first mode is greater than feedback resource overhead of the precoding matrix information generated in the second mode. In some embodiments, the value of M is less than the value of N.

In some embodiments, feedback resource overhead of the precoding matrix information generated in the first mode is less than feedback resource overhead of the precoding matrix information generated in the second mode. In some embodiments, the value of M is greater than the value of N.

In some embodiments, upon receiving the encoded precoding matrix information, the second node may recover precoding matrices determined by the first node according to the encoded precoding matrix information.

In addition, for detailed descriptions about step S201 to step S202, reference may further be made to the related descriptions of the above step S101 to step S103, which will not be repeated herein.

Based on the technical solutions provided in the present disclosure, receiving the precoding matrix information at the M time points which is smaller than K may reduce resource overhead for feedback.

The above mainly introduces the solutions provided in the present disclosure from the perspective of interaction between various communication nodes. It can be understood that in order to implement the above functions, each node (for example, an apparatus or a device) includes corresponding hardware structures and/or software modules for performing respective functions. Those skilled in the art should be easily aware that in combination with the algorithm steps of the examples described in the embodiments disclosed herein, the present disclosure may be implemented in a form of hardware or a combination of hardware and computer software. Whether a certain function is performed by hardware or computer software driving hardware depends on specific applications and design constraint conditions of the technical solutions. A professional technician may use different methods for each specific application to implement the described functions, but such an implementation should not be considered beyond the scope of the present disclosure.

In the embodiments of the present disclosure, the communication apparatus may be divided into function modules according to the method embodiments described above, for example, each functional module may be divided corresponding to each function, or two or more functions may be integrated into a functional module. The above-mentioned integrated module may be implemented in the form of hardware or software. It should be noted that the division of modules in the embodiments of the present disclosure is illustrative, and is merely a logical functional division, and there may be other division methods in actual implementations. The following is an example of dividing each functional module corresponding to each function, for illustration.

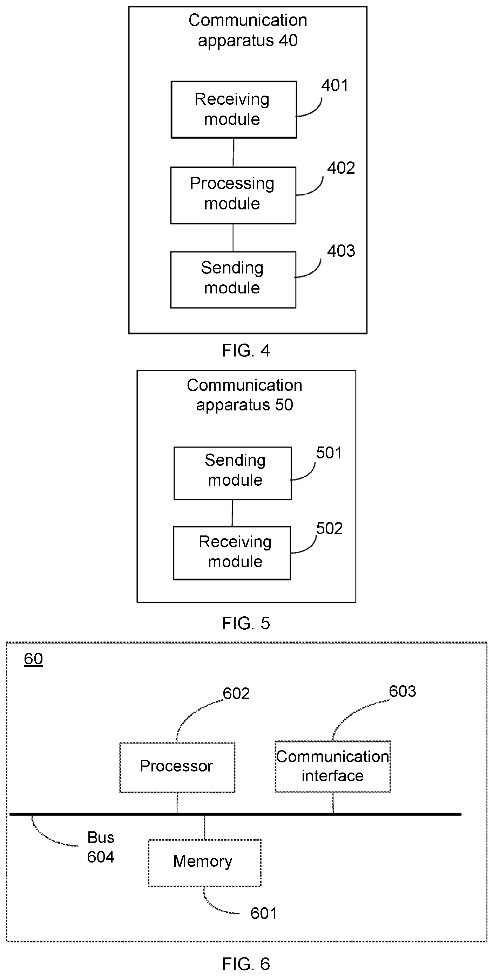

FIG. 4 shows a schematic composition diagram of a communication apparatus provided in the embodiments of the present disclosure, and the communication apparatus is applied to a first node. As shown in FIG. 4, the communication apparatus 40 includes a receiving module 401, a processing module 402, and a sending module 403.

The receiving module 401 is configured to receive first configuration information, where the first configuration information is used to indicate K time points, and K is a positive integer greater than 1.

The processing module 402 is configured to select M time points from the K time points.

The sending module 403 is configured to send channel state information based on the M time points; where the channel state information includes precoding matrix information of the M time points, and M is a positive integer less than K.

In some embodiments, the channel state information does not include precoding matrix information of other N time points among the K time points except the M time points, and N is equal to a difference between K and M.

In some embodiments, the channel state information further includes precoding matrix information of other N time points among the K time points except the M time points, the precoding matrix information of the M time points is generated in a first mode, the precoding matrix information of the N time points is generated in a second mode, and N is equal to a difference between K and M; where feedback resource overhead corresponding to the first mode is not equal to feedback resource overhead corresponding to the second mode.

In some embodiments, feedback resource overhead of the precoding matrix information generated in the first mode is greater than feedback resource overhead of the precoding matrix information generated in the second mode.

In some embodiments, a value of M is less than a value of N.

In some embodiments, feedback resource overhead of the precoding matrix information generated in the first mode is less than feedback resource overhead of the precoding matrix information generated in the second mode.

In some embodiments, the value of M is greater than the value of N.

In some embodiments, the first configuration information includes the K time points.

In some embodiments, the first configuration information includes a time offset value of each of the K time points relative to a reference time point.

In some embodiments, the first configuration information is used to indicate the K time points, including: indicating a first time point among the K time points, and time offset values of remaining time points relative to the first time point.

In some embodiments, the above indicating the first time point among the K time points, includes: indicating an event occurring at the first time point.

In some embodiments, the above indicating the first time point among the K time points, includes any one of: indicating an event, where the first time point has a preset time offset value from a time point at which the event occurs.

In some embodiments, the first configuration information is used to indicate the K time points, including: indicating a time offset value of a first time point among the K time points relative to a reference time point, and time offset values of remaining time points relative to the first time point.

In some embodiments, the first configuration information is further used to indicate the reference time point.

In some embodiments, the first configuration information is further used to indicate the reference time point, including: indicating an event occurring at the reference time point.

In some embodiments, the event includes any one of:
transmitting an acknowledgement indication corresponding to data of a physical shared channel;
transmitting data of a physical shared channel corresponding to an acknowledgement indication;
transmitting a negative indication corresponding to data of a physical shared channel;
transmitting data of a physical shared channel corresponding to a negative indication;
a beam failure;
beam establishment.

In some embodiments, the first configuration information is used to indicate the K time points, including: a time offset value of a first time point among the K time points relative to a reference time point, and time offset values of two adjacent time points among the K time points.

In some embodiments, the first configuration information is used to indicate the K time points, including: time offset values of other time points, except a first time point among the K time points relative to a reference time point.

In some embodiments, the first configuration information is used to indicate the K time points, including: time offset values of other time points, except a first time point among the K time points relative to the first time point.

In some embodiments, the first configuration information is used to indicate the K time points, including: time offset values of two adjacent time points among the K time points.

In some embodiments, a first time point is indicated by first signaling; or an event occurring at a first time point is a predefined event.

In some embodiments, the first configuration information is further used to indicate a value of M.

In some embodiments, the first configuration information includes a first parameter; the value of M is determined according to the first parameter and a value of K.

In some embodiments, a value of K is determined according to the first parameter.

In some embodiments, the first parameter is determined according to a value of K.

In some embodiments, the first parameter and a value of K are a first value combination, the first value combination is determined among a plurality of candidate value combinations, and each candidate value combination is used to indicate a group of a candidate value of the first parameter and a candidate value of K.

In some embodiments, the processing module 402 is further configured to determine a value of M.

In some embodiments, the value of M is determined among a plurality of candidate values of M indicated by a second node.

In some embodiments, the value of M is determined based on a value of K.

In some embodiments, a value of M is determined according to a number of reference signal resources or a time interval between reference signal resources.

In some embodiments, the first configuration information is used to indicate the K time points, including: the first configuration information is used to indicate a second parameter and time point information; where a value of K is determined according to the number of reference signal resources and the second parameter.

In some embodiments, the first configuration information is further used to indicate a third parameter; where the value of M is determined according to the number of reference signal resources and the third parameter.

In some embodiments, the value of M is determined according to a numerical relationship between a first time interval and a second time interval of the reference signal resources, and a value of K.

In some embodiments, a value of M is determined based on a time interval between the M time points.

In some embodiments, a value of M is determined based on a number of reference signal resources and a value of K.

In some embodiments, the M time points satisfy at least one of:
the M time points including a first time point among the K time points;
the M time points including a last time point among the K time points;
the M time points being indicated by a second node among the K time points;
the M time points being determined by the first node;
D time points among the M time being indicated by a second node, and E time points among the M time being determined by the first node;
F time points among the M time being preset, and E time points among the M time being determined by the first node.

For more detailed descriptions of the above receiving module 401, processing module 402, and sending module 403, as well as more detailed descriptions of various technical features therein, and descriptions of beneficial effects, etc., reference may be made to the corresponding method embodiment parts above, which will not be repeated herein.

FIG. 5 shows a schematic composition diagram of a communication apparatus provided in the embodiments of the present disclosure. As shown in FIG. 5, the communication apparatus 50 includes a sending module 501 and a receiving module 502.

The sending module 501 is configured to send first configuration information, where the first configuration information is used to indicate K time points, and K is a positive integer greater than 1.

The receiving module 502 is configured to receive channel state information; where the channel state information includes precoding matrix information of M time points selected from the K time points by a first node, and M is a positive integer less than K.

In some embodiments, the channel state information does not include precoding matrix information of other N time points among the K time points except the M time points, and N is equal to a difference between K and M.

In some embodiments, the channel state information further includes precoding matrix information of other N time points among the K time points except the M time points, the precoding matrix information of the M time points is generated in a first mode, the precoding matrix information of the N time points is generated in a second mode, and N is equal to a difference between K and M; where feedback resource overhead corresponding to the first mode is not equal to feedback resource overhead corresponding to the second mode.

In some embodiments, feedback resource overhead of the precoding matrix information generated in the first mode is greater than feedback resource overhead of the precoding matrix information generated in the second mode. In some embodiments, a value of M is less than a value of N.

In some embodiments, feedback resource overhead of the precoding matrix information generated in the first mode is less than feedback resource overhead of the precoding matrix information generated in the second mode. In some embodiments, the value of M is greater than the value of N.

In some embodiments, upon receiving the encoded precoding matrix information, the second node may recover precoding matrices determined by the first node according to the encoded precoding matrix information.

In some embodiments, the first configuration information includes the K time points.

In some embodiments, the first configuration information includes a time offset value of each of the K time points relative to a reference time point.

In some embodiments, the first configuration information is used to indicate the K time points, including: indicating a first time point among the K time points, and time offset values of remaining time points relative to the first time point.

In some embodiments, indicating the first time point among the K time points, includes: indicating an event occurring at the first time point.

In some embodiments, indicating the first time point among the K time points, includes any one of: indicating an event, where the first time point has a preset time offset value from a time point at which the event occurs.

In some embodiments, the first configuration information is used to indicate the K time points, including: indicating a time offset value of a first time point among the K time points relative to a reference time point, and time offset values of remaining time points relative to the first time point.

In some embodiments, the first configuration information is further used to indicate the reference time point.

In some embodiments, the first configuration information is further used to indicate the reference time point, including: indicating an event occurring at the reference time point.

In some embodiments, the event includes any one of:
transmitting an acknowledgement indication corresponding to data of a physical shared channel;
transmitting data of a physical shared channel corresponding to an acknowledgement indication;
transmitting a negative indication corresponding to data of a physical shared channel;
transmitting data of a physical shared channel corresponding to a negative indication;
a beam failure;
beam establishment.

In some embodiments, the first configuration information is used to indicate the K time points, including: a time offset value of a first time point among the K time points relative to a reference time point, and time offset values of two adjacent time points among the K time points.

In some embodiments, the first configuration information is used to indicate the K time points, including: time offset values of other time points, except a first time point among the K time points relative to a reference time point.

In some embodiments, the first configuration information is used to indicate the K time points, including: time offset values of other time points, except a first time point among the K time points relative to the first time point.

In some embodiments, the first configuration information is used to indicate the K time points, including: time offset values of two adjacent time points among the K time points.

In some embodiments, a first time point is indicated by first signaling; or an event occurring at a first time point is a predefined event.

In some embodiments, the first configuration information is further used to indicate a value of M.

In some embodiments, the first configuration information includes a first parameter; the value of M is determined according to the first parameter and a value of K.

In some embodiments, a value of K is determined according to the first parameter.

In some embodiments, the first parameter is determined according to a value of K.

In some embodiments, the first parameter and a value of K are a first value combination, the first value combination is determined among a plurality of candidate value combinations, and each candidate value combination is used to indicate a group of a candidate value of the first parameter and a candidate value of K.

In some embodiments, the first node may determine a value of M, and then determine M time points among the K time points.

In some embodiments, the value of M is determined among a plurality of candidate values of M indicated by a second node.

In some embodiments, the value of M is determined based on a value of K.

In some embodiments, a value of M is determined according to a number of reference signal resources or a time interval between reference signal resources.

In an example, the second node may further send second configuration information to the first node, and correspondingly, the first node may further receive the second configuration information from the second node, where the second configuration information indicates reference signal resources, and a value of M is determined according to a number of reference signal resources or a time interval between the reference signal resources.

In some embodiments, the first configuration information is used to indicate the K time points, including: the first configuration information is used to indicate a second parameter and time point information; where a value of K is determined according to the number of reference signal resources and the second parameter.

In some embodiments, the first configuration information is further used to indicate a third parameter; where the value of M is determined according to the number of reference signal resources and the third parameter.

In some embodiments, the value of M is determined according to a numerical relationship between a first time interval and a second time interval of the reference signal resources, and a value of K.

In some embodiments, a value of M is determined based on a time interval between the M time points.

In some embodiments, a value of M is determined based on a number of reference signal resources and a value of K.

In some embodiments, the M time points satisfy at least one of:
the M time points including a first time point among the K time points;
the M time points including a last time point among the K time points;
the M time points being indicated by a second node among the K time points;
the M time points being determined by the first node;
D time points among the M time being indicated by a second node, and E time points among the M time being determined by the first node;
F time points among the M time being preset, and E time points among the M time being determined by the first node.

For more detailed descriptions of the above sending module 501 and receiving module 502, as well as more detailed descriptions of various technical features therein, and descriptions of beneficial effects, etc., reference may be made to the corresponding method embodiment parts above, which will not be repeated herein.

It needs to be noted that the modules in FIG. 4 or FIG. 5 may also be referred to as units, for example, the processing module may be referred to as a processing unit. In addition, in the embodiments shown in FIG. 4 or FIG. 5, names of the respective modules may also not be the names shown in the figures, for example, the sending module or the receiving module may also be referred to as a communication module.

If the respective units in FIG. 4 or FIG. 5 are implemented in a form of software functional modules, and sold or used as independent products, they may be stored in a computer-readable storage medium. Based on such an understanding, an essence of the technical solutions of the embodiments of the present disclosure, or a part that makes a contribution to the prior art, or all or a part of the technical solutions, may be embodied in a form of a software product, and the computer software product is stored in a storage medium and includes several instructions to enable a computer device (which may be a personal computer, a server, or a network device, etc.) or a processor to perform all or part of the steps of the methods in the various embodiments of the present disclosure. A storage medium storing the computer software product includes: a USB flash disk, a mobile hard disk, a read-only memory (ROM), a random access memory (RAM), a magnetic disk, an optical disk, and other various media that may store a program code.

In a case where functions of the above integrated modules are implemented in a form of hardware, a schematic structural diagram of a communication apparatus is provided in the embodiments of the present disclosure. As shown in FIG. 6, the communication apparatus 60 includes: a processor 602, a communication interface 603, and a bus 604. In some embodiments, the communication apparatus 60 may further include a memory 601.

The processor 602 may implement or perform various exemplary logical blocks, modules and circuits described in conjunction with the content of the present disclosure. The processor 602 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the content of the present disclosure. The processor 602 may also be a combination that implements computing functions, for example, including a combination of one or more microprocessors, a combination of a digital signal processor (DSP) and a microprocessor, or the like.

The communication interface 603 is configured to connect with other devices via a communication network. The communication network may be an Ethernet, a radio access network, a wireless local area network (WLAN), or the like.

The memory 601 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 601 may exist independently of the processor 602, and the memory 601 may be connected to the processor 602 via the bus 604 and is used for storing instructions or program codes. The processor 602, when calling and executing the instructions or program codes stored in the memory 601, is capable of implementing the method provided in the embodiments of the present disclosure.

In another possible implementation, the memory 601 may also be integrated with the processor 602.

The bus 604 may be an extended industry standard architecture (EISA) bus or the like. The bus 604 may be classified into an address bus, a data bus, a control bus, and the like. For the convenience of representation, only one thick line is used in FIG. 7 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the device or apparatus is divided into different functional modules to complete all or a part of the functions mentioned above.

The embodiments of the present disclosure further provide a computer-readable storage medium ( e.g., including a non-transitory computer readable storage medium). All or a part of the procedures in the method embodiments mentioned above may be completed by related hardware indicated by computer instructions, and the program may be stored in the computer-readable storage medium mentioned above. The program, when executed, may include the procedures of the method embodiments mentioned above. The computer readable storage medium may be an internal storage unit or a memory of any one of the aforementioned embodiments. The above-mentioned computer readable storage medium may also be an external storage device of the device or apparatus mentioned above, e.g., a plug-in hard disk, a smart memory card (smart media card, SMC), a secure digital (SD) card, a flash card, etc., equipped on the device or apparatus mentioned above. Furthermore, the computer-readable storage medium mentioned above may further include both an internal storage unit and an external storage device of the device or apparatus mentioned above. The computer-readable storage medium mentioned above is used to store the computer program mentioned above, and other programs and data required for the device or apparatus mentioned above. The computer-readable storage medium mentioned above may further be used to temporarily store data that has been output or is to be output.

The embodiments of the present disclosure further provide a computer program product, the computer product contains a computer program, the computer program product, when executed on a computer, causes the computer to perform any one of the methods provided in the above embodiments.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "include/includes/including" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with exemplary features and embodiments thereof, it is apparent that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents thereof within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of the claims.

## Claims

1. A method for sending precoding matrix information, applied to a first node, wherein the method comprises:
receiving first configuration information, wherein the first configuration information is used to indicate K time points, and K is a positive integer greater than 1;
selecting M time points from the K time points; and
sending channel state information based on the M time points; wherein the channel state information comprises precoding matrix information of the M time points, and M is a positive integer less than K.

2. The method according to claim 1, wherein the channel state information does not comprise precoding matrix information of other N time points among the K time points except the M time points, and N is equal to a difference between K and M.

3. The method according to claim 1, wherein the channel state information further comprises precoding matrix information of other N time points among the K time points except the M time points, the precoding matrix information of the M time points is generated in a first mode, the precoding matrix information of the N time points is generated in a second mode, and N is equal to a difference between K and M; wherein feedback resource overhead corresponding to the first mode is not equal to feedback resource overhead corresponding to the second mode.

4. The method according to claim 3, wherein feedback resource overhead of the precoding matrix information generated in the first mode is greater than feedback resource overhead of the precoding matrix information generated in the second mode.

5. The method according to claim 4, wherein a value of M is less than a value of N.

6. The method according to claim 3, wherein feedback resource overhead of the precoding matrix information generated in the first mode is less than feedback resource overhead of the precoding matrix information generated in the second mode.

7. The method according to claim 6, wherein the value of M is greater than the value of N.

8. The method according to claim 1, wherein the first configuration information comprises the K time points.

9. The method according to claim 1, wherein the first configuration information comprises a time offset value of each of the K time points relative to a reference time point.

10. The method according to claim 1, wherein the first configuration information is used to indicate the K time points, comprising: indicating a first time point among the K time points, and time offset values of remaining time points relative to the first time point.

11. The method according to claim 10, wherein indicating the first time point among the K time points, comprises: indicating an event occurring at the first time point.

12. The method according to claim 10, wherein indicating the first time point among the K time points, comprises any one of: indicating an event, wherein the first time point has a preset time offset value from a time point at which the event occurs.

13. The method according to claim 1, wherein the first configuration information is used to indicate the K time points, comprising: indicating a time offset value of a first time point among the K time points relative to a reference time point, and time offset values of remaining time points relative to the first time point.

14. The method according to claim 13, wherein the first configuration information is further used to indicate the reference time point.

15. The method according to claim 14, wherein the first configuration information is further used to indicate the reference time point, comprising: indicating an event occurring at the reference time point.

16. The method according to any one of claims 11, 12, or 15, wherein the event comprises any one of:
transmitting an acknowledgement indication corresponding to data of a physical shared channel;
transmitting data of a physical shared channel corresponding to an acknowledgement indication;
transmitting a negative indication corresponding to data of a physical shared channel;
transmitting data of a physical shared channel corresponding to a negative indication;
a beam failure;
beam establishment.

17. The method according to claim 1, wherein the first configuration information is used to indicate the K time points, comprising: a time offset value of a first time point among the K time points relative to a reference time point, and time offset values of two adjacent time points among the K time points.

18. The method according to claim 1, wherein the first configuration information is used to indicate the K time points, comprising: time offset values of other time points, except a first time point among the K time points relative to a reference time point.

19. The method according to claim 1, wherein the first configuration information is used to indicate the K time points, comprising: time offset values of other time points, except a first time point among the K time points relative to the first time point.

20. The method according to claim 1, wherein the first configuration information is used to indicate the K time points, comprising: time offset values of two adjacent time points among the K time points.

21. The method according to any one of claims 18 to 20, wherein a first time point among the K time points is indicated by first signaling; or an event occurring at a first time point among the K time points is a predefined event.

22. The method according to claim 1, wherein the first configuration information is further used to indicate a value of M.

23. The method according to claim 22, wherein the first configuration information comprises a first parameter; the value of M is determined according to the first parameter and a value of K.

24. The method according to claim 22, wherein the first configuration information comprises a first parameter; a value of K is determined according to the first parameter.

25. The method according to claim 22, wherein the first configuration information comprises a first parameter; the first parameter is determined according to a value of K.

26. The method according to claim 22, wherein the first configuration information comprises a first parameter; the first parameter and a value of K are a first value combination, the first value combination is determined among a plurality of candidate value combinations, and each candidate value combination among the plurality of candidate value combinations is used to indicate a group of a candidate value of the first parameter and a candidate value of K.

27. The method according to claim 1, further comprising:
determining, by the first node, a value of M.

28. The method according to claim 27, wherein the value of M is determined among a plurality of candidate values of M indicated by a second node.

29. The method according to claim 27, wherein the value of M is determined based on a value of K.

30. The method according to claim 1, wherein a value of M is determined according to a number of reference signal resources or a time interval between reference signal resources.

31. The method according to claim 30, wherein the first configuration information is used to indicate the K time points, comprising: the first configuration information is used to indicate a second parameter and time point information; wherein a value of K is determined according to the number of reference signal resources and the second parameter.

32. The method according to claim 30, wherein the first configuration information is further used to indicate a third parameter; wherein the value of M is determined according to the number of reference signal resources and the third parameter.

33. The method according to claim 30, wherein the value of M is determined according to a numerical relationship between a first time interval and a second time interval of the reference signal resources, and a value of K.

34. The method according to claim 1, wherein a value of M is determined based on a time interval between the M time points.

35. The method according to claim 1, wherein a value of M is determined based on a number of reference signal resources and a value of K.

36. The method according to claim 1, wherein the M time points satisfy at least one of:
the M time points comprising a first time point among the K time points;
the M time points comprising a last time point among the K time points;
the M time points being indicated by a second node among the K time points;
the M time points being determined by the first node;
D time points among the M time being indicated by a second node, and E time points among the M time being determined by the first node;
F time points among the M time being preset, and E time points among the M time being determined by the first node.

37. A method for receiving precoding matrix information, applied to a second node, wherein the method comprises:
sending first configuration information, wherein the first configuration information is used to indicate K time points, and K is a positive integer greater than 1; and
receiving channel state information; wherein the channel state information comprises precoding matrix information of M time points selected from the K time points by a first node, and M is a positive integer less than K.

38. The method according to claim 37, wherein the channel state information does not comprise precoding matrix information of other N time points among the K time points except the M time points, and N is equal to a difference between K and M.

39. The method according to claim 37, wherein the channel state information further comprises precoding matrix information of other N time points among the K time points except the M time points, the precoding matrix information of the M time points is generated in a first mode, the precoding matrix information of the N time points is generated in another mode, and N is equal to a difference between K and M; wherein feedback resource overhead corresponding to the first mode is not equal to feedback resource overhead corresponding to the another mode.

40. The method according to claim 37, wherein the first configuration information is used to indicate the K time points, comprising: indicating a first time point among the K time points, and time offset values of remaining time points relative to the first time point.

41. A communication apparatus, comprising: a memory and a processor; wherein the memory and the processor are coupled; the memory is configured to store instructions executable by the processor; the processor, upon executing the instructions, performs the method according to any one of claims 1 to 40.

42. A computer-readable storage medium, wherein the computer-readable storage medium stores computer instructions, and when the computer instructions are run on a communication apparatus, the communication apparatus performs the method according to any one of claims 1 to 40.
